# EUROPÄISCHE PATENTSCHRIFT

(11) **EP 0 990 007 B1**
(45) Veröffentlichungstag und Bekanntmachung des Hinweises auf die Patenterteilung: **24.03.2004**
(21) Anmeldenummer: 98936311.4
(22) Anmeldetag: 06.06.1998
(51) Int. Cl.: C08G 63/85

(54) **VERFAHREN ZUR HERSTELLUNG VON POLYESTERN UND COPOLYESTERN**
METHOD FOR PRODUCING POLYESTERS AND COPOLYESTERS
PROCEDE DE PRODUCTION DE POLYESTERS ET DE COPOLYESTERS

(30) Priorität: 10.06.1997 DE 19724349
(43) Veröffentlichungstag der Anmeldung: 05.04.2000
(73) Patentinhaber: Acordis Industrial Fibers GmbH, 42103 Wuppertal (DE)
(72) Erfinder: SEIDEL, Ulf, D-63814 Mainaschaff (DE); MARTL, Michael, Gerd, D-60325 Frankfurt (DE)
(74) Vertreter: Fett, Günter
(86) Internationale Anmeldenummer: PCT/EP1998/003400
(87) Internationale Veröffentlichungsnummer: WO 1998/056848

(56) Entgegenhaltungen:
- EP-A2- 0 736 560
- DE-A1- 4 443 648
- US-A- 3 936 421
- US-A- 4 072 631
- US-A- 5 106 944
- STN International, File CAPLUS, Accession no. 1975:4793, Asahi Cheical Industry Co., Ltd.: "Linear polyesters", Japan., 7 pp., XP002900255; Chemical Abstracts no 82:4793

## Beschreibung

Polyester und Copolyester werden unabhängig von ihrer Konstitution, die sich über zahlreiche mögliche Variationen von aliphatisch bis vollaromatisch erstrecken kann, im allgemeinen nach einem Zweistufenverfahren hergestellt. In der ersten Stufe werden insbesondere durch Umesterung von Dicarbonsäureestern oder durch Veresterung von Dicarbonsäuren mit überschüssigen Dialkoholen die zu polykondensierenden Ester oder ein aus einem Gemisch von Oligoestern bestehendes Polyestervorkondensat hergestellt, dessen durchschnittliches relatives Molekulargewicht je nach Molverhältnis der Ausgangsverbindungen in der Regel zwischen 100-2000 betragen kann. Für eine gegebenenfalls gewünschte verzweigende Modifizierung können auch begrenzte Mengen von höherfunktionellen Ausgangskomponenten wie Glycerin, Pentaerythrit und Trimellitsäure, eingesetzt werden. Äquivalente Verfahrensweisen für die erste Stufe sind die Umsetzung von Dicarbonsäurechloriden mit Diolen, die Anlagerung von Ethylenoxid an Dicarbonsäuren, die Veresterung eines Anhydrids mit einem Dialkohol, die Umsetzung von Anhydriden mit Epoxiden und die Umsetzung von Dicarbonsäuren oder Dicarbonsäureestern mit dem Diacetat eines Diols. Die zweite Reaktionsstufe stellt die eigentliche Polykondensation dar, in der unter Abspaltung von Alkohol und/oder Wasser das gewünschte hohe Molekulargewicht der Polyester oder Copolyester erreicht werden muß. Neben dem Anlegen von Vakuum, Durchleiten eines Inertgases und der Erhöhung der Reaktionstemperatur wird die Polykondensation insbesondere durch spezifische Polykondensationskatalysatoren beschleunigt.

Für die Herstellung von film- und faserbildenden Polyestern sind zur Beschleunigung der Polykondensationsreaktion bereits eine Legion von Polykondensationskatalysatoren vorgeschlagen worden. Da die überwiegende Mehrzahl der in zahlreichen Patenten genannten Verbindungen eine unzureichende katalytische Aktivität oder andere Nachteile besitzt, hat sich in der Technik fast ausschließlich Sb-haltige Verbindungen als Polykondensationskatalysator durchgesetzt. Leider stößt dieser Katalysator in neuerer Zeit auf umweltpolitische Bedenken, so daß sein Ersatz allgemein wünschenswert erscheint.

Es werden immer wieder Versuche unternommen, Ersatzkatalysatoren für Sb₂O₃ bereitzustellen. Insbesondere wurden bereits Alkoxytitanate; speziell Tetrabutyltitanat, vorgeschlagen, wobei diese Verbindungen entweder nur für die Umesterung (JA-PS 74 11 474), für die Umesterung und Polykondensation (JA-OS 77 86 496) oder nur für die Polykondensation (JA-OS 80 23 136) verwendet werden, da sie für beide Stufen katalytisch wirksam sind. Da der Einsatz von Titanverbindungen Verfärbungen an den polykondensierten Polyestern hervorruft, ist es nach der JA-OS 78 106 792 erforderlich, Titanverbindungen mit verschiedenen organischen Substanzen, z.B. Aminen, vorzubehandeln oder mit anderen Polykondensationskatalysatoren, insbesondere mit Sb₂O₃, zu kombinieren (JA-OS 78 109 597).

Aus der DE P 947 517 ist es bekannt, zur Herstellung von Polyethylenterephthalat Metalloxide, wie Zinkoxid; Bortrioxid, Bleioxid und Titandioxid als Polykondensationskatalysator einzusetzen. Die Polykondensationsdauer mit diesen Metalloxiden ist aber unverhältnismäßig lang und währt nach den dortigen Beispielen 7-14 Stunden. Aus diesem Grunde wird in BE P 619 210 zur Herstellung der dortigen Polyester bei Einsatz von TiO₂ als weiterer Polykondensationskatalysator Sb₂O₃ verwendet (vgl. Beispiel 1), durch den sich die Schnelligkeit der Polykondensation immens erhöht. Aus diesen Umständen resultierte natürlich die Zweckmäßigkeit, nur mit Sb₂O₃ oder Titantetrabutylat als Polykondensationskatalysator zu arbeiten (vgl. die weiteren Beispiele von BE P 619 210).

DE-A1 44 00 300 und DE-A1 44 43 648 offenbaren TiO₂/SiO₂- und TiO₂/ZrO₂-Copräzipitate als Polykondensationskatalysatoren.

Die vorliegende Erfindung stellt sich die Aufgabe, für die allgemeine Synthese von Polyestern und Copolyestern weitere neue Polykondensationskatalysatoren als Ersatz für Sb₂O₃ bereitzustellen, die sich insbesondere durch eine höhere katalytische Aktivität auszeichnen, als sie Sb₂O₃, TiO₂ und Titantetrabutylat in jeweils gleicher Konzentration aufweisen.

Gegenstand der Erfindung ist ein Verfahren zur Herstellung von Polyestern und Copolyestern durch Polykondensation von polyesterbildenden Ausgangskomponenten, wobei in einer ersten Reaktionsstufe Ester oder Oligoester hergestellt werden, die in einer zweiten Reaktionsstufe in Gegenwart von Titankatalysatoren polykondensiert werden, das dadurch gekennzeichnet ist, daß man in der Polykondensationsstufe zur Polykondensation der Ester oder Oligoester als Polykondensationskatalysator Copräzipitate einzeln oder im Gemisch einsetzt, die durch simultane hydrolytische Ausfällung einer Titanverbindung und einer Metallverbindung eines aus den Gruppen IA, IIA, VIIIA, IB, IIB, IIIB und IVB ausgewählten Metalls hergestellt wurden, wobei die Titanverbindung und die Metallverbindung unabhängig voneinander ein Alkylat, Alkoholat oder Carboxylat des Titans bzw. des Metalls ist und das Molverhältnis der Titanverbindung zur Metallverbindung ≥ 50 : 50 mol/mol ist.

Bevorzugte Metalle in der Metallverbindung sind Natrium, Kalium, Magnesium, Calcium, Eisen, Cobald, Kupfer, Zink, Aluminium, Germanium und Zinn.

Das bevorzugte Molverhältnis der Titanverbindung zur Metallverbindung beträgt ≥ 80 : 20 mol/mol.

Der Alkylat-, Alkoholat- oder Carboxylat-Rest des Titans bzw. des Metalls ist z.B. eine Verbindung mit 1 bis 6 C-Atomen, wobei als Alkylat die Butylgruppe, als Alkoholat die Methylat-, Ethylat- oder i-Propylatgruppe und als Carboxylat die Acetatoder Oxalatgruppe besonders bevorzugt ist.

Eine besonders hohe katalytische Aktivität zeigen erfindungsgemäße Copräzipitate aus Titan(IV)-tetraisopropylat und Zinn(IV)-dioxalat in einem Molverhältnis von 90 : 10 mol/mol.

Im allgemeinen haben die erfindungsgemäßen Copräzipitate einen mit Karl Fischer Titration bestimmten und auf das hydratisierte Copräzipitat bezogenen Wassergehalt von 0 bis 15 Gew.%. Bei einem Wassergehalt von mehr als 15 Gew.% sinkt die Lagerstabilität, weil diese Katalysatoren nach der Lagerung eine beträchtliche geringere Aktivität zeigen.

Aufgrund der Tatsache, daß TiO₂ für die Synthese von Polyestern einen schlechten Polykondensationskatalysator darstellt (vgl. Vergleichsbeispiele 3a und 3b), ist es überraschend, daß die gemäß Anspruch 1 eingesetzten Copräzipitate überhaupt hochwirksame Polykondensationskatalysatoren insbesondere für die Herstellung fadenbildender hochmolekularer Polyester und Copolyester darstellen, darüber hinaus sogar in den in bevorzugter Weise verwendeten sehr geringen Einsatzmengen.

Die Herstellung der erfindungsgemäß verwendeten Copräzipitate aus Alkoholaten ist im Prinzip bekannt (vgl. z.B. B.E. Yoldes, J. Non-Cryst. Solids, 38 u. 39, 81 (1980); E.A. Barringer, H.K. Bowen, J.Am.Ceram. Soc., 65 C 199 (1982); E.A. Barringer, Ph. D. Thesis, MIT (1982); B. Fegley jr., E.A. Barringer, H.K. Bowen, J.Am.Ceram. Soc., 67, C 113 (1984)). Ausgegangen wird von Metallalkoxiden der Formel M(OR)ₘ, worin M je nach dem gewünschten Copräzipitat Ti und ein aus den Gruppen IA, IIA, VIIIA, IB, IIB, IIIB und IVB ausgewähles Metall und m die stabilste Wertigkeitsstufe des Metalls bedeuten. Die Alkoxide werden einer Hydrolyse unterworfen, wobei durch Polymerisationsreaktionen ein Netzwerk gebildet wird.

Geeignete Alkohole für die Herstellung der Metallalkoxide nach an sich bekannten Methoden sind z.B. einwertige Alkohole, wie Methylalkohol, Äthylalkohol, Propylalkohol, Isopropylalkohol, n-Butanol, Isobutylalkohol, n-Amylalkohol, 3-Methyl-1-butanol, n-Hexanol, 2-Hexanol, 2-Heptanol, n-Octanol und n-Decanol, die einzeln oder als Gemisch verwendet werden können. Es können aber auch mehrwertige Alkohole, gegebenenfalls als Gemisch mit einwertigen Alkoholen, Anwendung finden, wie Äthylenglykol, 1,2-Propandiol, 1,4-Butandiol, 1,6-Hexandiol, 1,10-Decandiol, Glycerin, Trimethylolpropan und Pentaerythrit.

In analoger Weise kann man zur Herstellung der Copräzipitate von Alkylaten, z.B. von Butylaten, oder von Carboxylaten, z.B. von Acetaten oder Oxalaten, ausgehen.

Die Hydrolyse der organometallischen Verbindungen, z.B. von Titan-tetraisopropylat und Sn(IV)dioxalat, kann in unterschiedlicher Art und Weise bewerkstelligt werden kann. So können z.B. die in absoluten Alkoholen, beispielsweise Äthanol, gelösten Titan- und Metallverbindungen mittels Zugabe von Wasser oder eines wäßrigen Alkohols innerhalb eines Zeitraums von etwa 20 Minuten bis 2 Stunden bei 0 bis 50°C hydrolysiert werden. Die Hydrolyse kann aber auch so bewerkstelligt werden, daß man dem ungelösten Gemisch der Titan- und Metallverbindung Wasser oder eine wäßrige Alkohollösung unter den oben genannten Bedingungen zutropfen läßt. Das zur Hydrolyse erforderliche Wasser kann aber auch als Feuchtigkeit in einer Gasphase enthalten sein, indem man z.B. in das Gemisch der Titan- und der Metallverbindung 3 bis 30 h lang bei 0 bis 50°C feuchten Stickstoff einleitet. Vorteilhaft kann auch die quasi "in situ-Bildung" einer für den Einsatz im Reaktor geeigneten Dispersion des Copräzipitates in Glykol sein. In diesem Fall können die ungelösten Gemische der Titan- und der Metallverbindung durch Zusatz von Glykol, das die für die Hydrolyse benötigte Wassermenge enthält, als Co-Präzipitat unter den obigen Bedingungen gefällt werden. Enthält das Glykol geringere Wassermengen, kann die Hydrolyse zusätzlich durch Einleiten von beispielsweise feuchtem Stickstoff in das Reaktionsgefäß durchgeführt werden.

Vorteilhafte Formen der Herstellung der erfindungsgemäß verwendeten Copräzipitate bei Raumtemperatur werden im experimentellen Teil in den Beispielen 1 bis 13 beschrieben. Unter den dortigen hydrolytischen Bedingungen wird eine zu vermeidende Gelbildung ausgeschlossen, und es erfolgt eine homogene Fällung der jeweiligen Copräzipitate.

Die Zugabemengen der erfindungsgemäßen, als Polykondensationskatalysator verwendeten Präzipitate und Copräzipitate können in weiten Grenzen variiert werden und schließen eine Gesamtmenge von etwa 5 bis 500 ppm, bezogen auf die zu polykondensierenden Ester oder Oligoester, ein. Sie können daher prinzipiell nach oben hin von der gleichen Größenordnung sein wie im Falle der Anwendung von Sb₂O₃, das in der Regel in einer Menge von etwa 300 bis 600 ppm als Polykondensationskatalysator eingesetzt wird.

Wenn bei bestimmten Anwendungsbereichen der hergestellten Polyester und Copolyester auf die Erzielung von guten Farbwerten geachtet werden muß, wird es jedoch bevorzugt, daß man das Copräzipitat in einer Gesamtmenge von nur 10 bis 100 ppm, bezogen auf die zu polykondensierenden Ester oder Oligoester, verwendet. Die erhöhte katalytische Aktivität der erfindungsgemäß verwendeten Copräzipitate gestattet die Anwendung von Zugabemengen, die erheblich geringer sind als im Falle der Anwendung von Sb₂O₃, wobei dann bei den so hergestellten Polyestern die gleiche Polykondensationszeit und - zumindest bei Verwendung eines aus Titan(IV)-tetraisopropylat und Zinn(IV)-dioxalat hergestellten Copräzipitates - ein völlig akzeptabler b*-Wert von 3,0 bis 8,0 erzielt wird. Dieser b*-Wert-Bereich entspricht insbesondere den Werten, die bei der Herstellung von Polyethylenterephthalat unter Verwendung von 400 ppm Sb₂O₃ als Polykondensationskatalysator ebenfalls erhalten werden.

Die Zugabe der erfindungsgemäß verwendeten Copräzipitate erfolgt vorzugsweise so, daß man sie den in der ersten Reaktionsstufe synthetisierten Estern oder Oligoestern, beispielsweise dem Bisglykolester der zu polykondensierenden Dicarbonsäure(n) und/oder dem Vorkondensat aus einem oder mehreren solcher Bisglykolester, vor ihrer Polykondensation in Form einer 5 bis 20%igen glykolischen Suspension zusetzt. Es ist aber auch im Prinzip möglich, die Copräzipitate schon zu irgendeinem Zeitpunkt während der ersten Reaktionsstufe zuzugeben, im Falle einer Umesterung gegebenenfalls zusammen mit einem oder mehreren Umesterungskatalysatoren. Im Falle einer Umesterung in der ersten Reaktionsstufe kann es zuweilen vorteilhaft sein, die Umesterungskatalysatoren nach der Umesterung in an sich bekannter Weise durch Zusatz von Phosphorverbindungen zu blockieren. Geeignete Phosphorverbindungen sind zum Beispiel Carbethoxy-methyl-diethylphosphonat, Di(polyoxyethylen)hydroxymethylphosphonat, Tetraisopropyl-methylen-diphosphonat und H₃PO₄, wobei im allgemeinen eine zugegebene P-Konzentration von 30-50 ppm ausreichend ist.

Die erfindungsgemäß verwendeten Copräzipitate eignen sich unter üblichen Reaktionsbedingungen prinzipiell als Polykondensationskatalysatoren zur Herstellung der verschiedenartigsten Polyester und Copolyester, bei der bisher Sb₂O₃ als Polykondensationskatalysator, gegebenenfalls auch in Kombination mit einem oder mehreren anderen Polykondensationskatalysatoren, eingesetzt wurde. Den unterschiedlichen Arten von Polyestern und Copolyestern entsprechen auch die unterschiedlichsten Anwendungsgebiete.

Soweit mit den erfindungsgemäß verwendeten Copräzipitaten Alkydharze und gesättigte Polyesterharze (Hydroxypolyester) mit einem relativen Molekulargewicht von < 10 000 hergestellt werden, können diese als Bindemittel in Lacken und Anstrichstoffen verwendet werden. Unter Alkydharzen werden hierin nach dem heutigen Sprachgebrauch öl- bzw. fettsäuremodifizierte Polyester aus Polycarbonsäuren und Polyalkoholen sowie deren Umsetzungsprodukte mit z.B. Vinylverbindungen, Epoxidharzen, Siliconen, Diisocyanaten und Organometallverbindungen ("modifizierte" Alkydharze) verstanden. Als Polycarbonsäuren für Alkydharze werden im wesentlichen Phthalsäure, Isopthalsäure, Malonsäure, Bernsteinsäure, Adipinsäure, Azelainsäure, Sebazinsäure, Dodecandisäure, dimerisierte Fettsäuren, Hexahydrophthalsäure, Hexahydroterephthalsäure, Maleinsäure, Fumarsäure und zwecks Flammhemmung halogenhaltige Dicarbonsäuren, wie Tetrachlorphthalsäureanhydrid, eingesetzt. Als Polyole verwendet man im allgemeinen Glycerin, Pentaerythrit, Dipentaerythrit, Trimethylolpropan, Trimethyloläthan, Sorbitol und difunktionelle Polyole, wie Äthylenglykol, 1,2-Propylenglykol, 1,3- und 1,4-Butandiol, Diäthylenglykol, Dipropylenglykol und Neopentylglykol. Dritte Komponente für die Herstellung von Alkydharzen sind langkettige Fettsäuren, seien es synthetische Fettsäuren, wie Pelargonsäure, Abietinsäure und synthetische Fettsäuregemische (C₇-C₉), oder natürliche Fettsäuren, die fast ausschließlich in Form ihrer Fette und Öle verwendet werden, z.B. Leinöl, Ricinusöl, Kokosöl, Sojaöl und Baumwollsaatöl. Zur Herstellung der gesättigten Polyesterharze, die in DIN 55 945 definiert werden, werden hingegen bei der Polykondensation keine längerkettigen Fettsäuren eingesetzt, während ansonsten die verwendeten gesättigten Polycarbonsäuren und Polyalkohole im wesentlichen die gleichen sind, wie man sie bei der Herstellung von Alkydharzen einsetzt.

Wenn mit den erfindungsgemäßen Copräzipitaten (Co)polyester als Vorprodukte für Polyurethane mit einem relativen Molekulargewicht von < 10 000 synthetisiert werden, führt dies je nach deren Weiterverarbeitung auf der Grundlage bekannter Verfahrensweisen nicht nur zu Polyurethan-Lacken, sondern auch zu einer Vielfalt unterschiedlicher Kunststofftypen mit variablen wertvollen Gebrauchseigenschaften (Duromere, Thermoplaste, Gießelastomere, harte und weiche Schaumstoffe, Preßmassen, harte und flexible Beschichtungen, Klebstoffe). Die niedrigmolekularen Polyester und Copolyester als Vorprodukte für Polyurethane werden im allgemeinen aus gesättigten aliphatischen oder aromatischen Dicarbonsäuren und difunktionellen oder di- und trifunktionellen Alkoholen hergestellt und sind linear oder leicht bis stark verzweigt. Mit den erfindungsgemäß verwendeten Copräzipitaten ist die Herstellung der dafür bekannten gesamten breiten Palette von Hydroxylpolyestern mit Hydroxylzahlen von 28 - 300 mg KOH/g und Säurezahlen meist unter 1 mg KOH/g möglich. Die stark verzweigten Polyester unter ihnen, die überwiegend auf der Basis von aromatischen oder hydroaromatischen Dicarbonsäuren gewonnen werden, dienen vorwiegend als Bindemittel für Polyurethanlacke.

Die erfindungsgemäß verwendeten Copräzipitate eignen sich unter üblichen Reaktionsbedingungen insbesondere als Polykondensationskatalysatoren zur Herstellung der bekannten hochschmelzenden faser- und filmbildenden Polyester, wie Polyethylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) und deren Mischpolyester auf der Basis hoher Homopolyester-Anteile von mindestens 80 Molprozent, die der Gattung der thermoplastischen Polyester angehören. Derartige Polyester und Copolyester besitzen grundsätzlich ein Molekulargewicht von > 10 000. Die mit den Copräzipitaten bevorzugt polykondensierten Polyalkylenterephthalate, insbesondere Polyethylenterephthalat und Polybutylenterephthalat, können als Mischpolyester bis zu 20 Molprozent aus Einheiten bestehen, die sich von mindestens einer weiteren polyesterbildenden Komponente ableiten. Im übrigen spielt es für die Anwendung der erfindungsgemäßen Polykondensationskatalysatoren naturgemäß keine Rolle, ob die Bisglykolester der zu polykondensierenden Dicarbonsäure(n) und/oder die Vorkondensate aus einem oder mehreren solchen Bisglykolester nach einem Umesterungsverfahren oder nach einem Direktveresterungsverfahren hergestellt worden sind.

So eignen sich die erfindungsgemäßen Polykondensationskatalysatoren sowohl für die Herstellung eines faserbildenden Polyethylenterephthalats mit einer intrinsic-Viskosität [η] von 0,65-0,75, das in der Regel zu Stapelfasern für textile Zwecke weiterverarbeitet wird, als auch für die Herstellung von faserbildenden Polyethylenterephthalaten mit einer intrinsic-Viskosität [η] von 0,75-0,80 und 0,95-1,05, aus denen Filamentgarne für industrielle Zwecke hergestellt werden. Die erhöhten Molekulargewichte lassen sich durch kontinuierliche Polykondensation mit direkter Verspinnung oder vorzugsweise durch Nachkondensation in fester Phase erzielen. Für die Nachkondensation in fester Phase ist es vorteilhaft, etwaige vorhandene Umesterungskatalysatoren in an sich bekannter Weise durch Phosphorverbindungen zu blockieren. Hierfür geeignete Phosphorverbindungen sind zum Beispiel Di(polyoxyethylen)hydroxymethylphosphonat, Tetraisopropyl-methylen-diphosphonat und H₃PO₄, wobei eine zugegebene P-Konzentration von 30-50 ppm ausreichend ist.

Die mit den erfindungsgemäßen Polykondensationskatalysatoren hergestellten faser- und filmbildenden thermoplastischen Polyester, insbesondere Polyethylenterephthalat und Polybutylenterephthalat, können beispielsweise natürlich auch mittels Spritzgießens und Extrudierens zu Formkörpern und Profilen aller Art verarbeitet werden. Wenn man zum Beispiel ein mit den erfindungsgemäßen Polykondensationskatalysatoren hergestelltes Polyethylenterephthalat zu PET-Flaschen verarbeitet, weisen diese eine höhere Transparenz auf.

Die weiteren polyesterbildenden Komponenten für faser- und filmbildende Copolyester können ein aliphatisches Diol, wie Ethylenglykol, Propylenglykol, Tetramethylenglykol, Pentamethylenglykol, Hexamethylenglykol, Polyethylenglykol, Polypropylenglykol und Poly(tetrahydrofuran)diol, ein aromatisches Diol, wie Brenzcatechin, Resorcin und Hydrochinon, ein alicyclisches Diol, wie 1,4-Cyclohexandimethanol und Cyclohexandiol, eine aliphatische Dicarbonsäure, wie Adipinsäure, Sebazinsäure und Decandicarbonsäure, eine aromatische Dicarbonsäure, wie Isophthalsäure, 5-Natriumsulfoisophthalsäure, Natriumsulfoterephthalsäure und 2,6-Naphthalindicarbonsäure, und eine alicyclische Dicarbonsäure, wie Hexahydroterephthalsäure und 1,3-Cyclohexandicarbonsäure, sein. Die analogen polyesterbildenden Komponenten zur Mischpolyesterbildung kommen auch für die zum Teil oben schon erwähnten fadenbildenden Homopolyester in Betracht, die nicht der Gattung der Polyalkylenterephthalate angehören.

Selbstverständlich können die film- und faserbildenden Polyester als übliche Modifizierungsmittel auch bekannte Verzweigungsmittel, wie Pentaerythrit, Trimellitsäure, Pyromellithsäure und Trimesinsäure oder deren Ester, in den dafür üblichen geringen Mengen von z.B. 1 bis 15 Mikroäquivalenten pro g Polymer enthalten, die ein Schnellspinnen von 3000 bis 4000 m/min und mehr, aber auch ein Strecktexturieren mit einer Geschwindigkeit von wenigstens 1000 m/min gewährleisten. Diese Verzweigungsmittel werden in vorteilhafter Weise als eine Lösung in Ethylenglykol dem Bisglykolester der zu polykondensierenden Dicarbonsäure(n) zugegeben.

Der Terminus Copolyester schließt ebenfalls die umfangreiche Klasse der Polyetherester ein. Die thermoplastischen Polyetherester stellen bekanntlich Blockcopolymere dar, die aus wechselseitig incompatiblen steifen kristallinen und weichen amorphen Segmenten synthetisiert werden. Die steifen und kurzkettigen Segmente bestehen im allgemeinen überwiegend aus einem aromatischen Polyester, z.B. Ethylenterephthalat- oder Butylenterephthalat-Einheiten, während die weichen und langkettigen Segmente insbesondere aus dem Reaktionsprodukt eines aliphatischen Polyethers, z.B. Poly(butylenglykol) oder Poly(ethylenglykol), mit einer aliphatischen, cycloaliphatischen oder aromatischen Dicarbonsäure bestehen. Sowohl die langkettigen als auch die kurzkettigen Estereinheiten stellen oft Copolyester dar, die aus der begrenzten Mitverwendung einer oder mehrerer weiterer Dicarbonsäure- und Glykolkomponenten resultieren. Thermoplastische Polyetherester, zu deren Herstellung sich die erfindungsgemäß als Polykondensationskatalysatoren eingesetzten Copräzipitate ebenfalls eignen, werden beispielsweise in der US-PS 3,023,192, GB-PS 682 866, DE-PS 23 52 584, EP-A-0 051 220 und EP-A-0 109 123 beschrieben.

Die erfindungsgemäß verwendeten Copräzipitate sind auch für die Herstellung von vollaromatischen bzw. flüssig-kristallinen Polyestern geeignet, wenn diese auf der Basis üblicher Polykondensationskatalysatoren, wie Sb₂O₃ und Titanalkoxide, erfolgt. So sind beispielsweise nach der US-PS 4,421,908 vollaromatische Polyester aus 10-90 Molprozent einer Hydroxy-naphthalin-carbonsäure, 5-45 Molprozent mindestens einer weiteren aromatischen Dicarbonsäure, z.B. Terephthalsäure, und 5-45 Molprozent mindestens eines aromatischen Diols, z.B. Hydrochinon, bekannt. Nach der EP-A-0 472 366 werden vollaromatische Polyester aus (A) Isophthalsäure, (B) Hydrochinon, (C) aus 4,4-Dihydroxydiphenyl und/oder p-Hydroxybenzoesäure und/oder 2-Hydroxy-6-naphthalincarbonsäure und (D) einem Phenol hergestellt. Und in der EP-A- 0 496 404 werden vollaromatische Polyester beschrieben, die durch Umsetzung von mindestens einem Dialkylester einer aromatischen Dicarbonsäure, z.B. DMT, mit mindestens einem aromatischen Polycarbonat, z.B. Poly(4,4'-isopropylidendiphenylen-carbonat) und/oder einem aromatischen Dialkyldicarbonat erhalten werden. In diesen beispielhaft genannten Verfahren zur Herstellung vollaromatischer Polyester lassen sich die darin verwendeten Polykondensationskatalysatoren, wie Sb₂O₃, Titanalkoxide und Zirkonalkoxide, in vorteilhafter Weise durch die erfindungsgemäßen spezifischen Copräzipitate ersetzen, ganz gleich, ob man sie schon in der ersten Reaktionsstufe oder der darauf folgenden eigentlichen Polykondensationsstufe zusetzt.

Die Erfindung wird anhand der nachfolgenden Beispiele näher erläutert. Die darin angegebene relative Lösungsviskosität wurde bei 25°C als 1 gew.%ige Lösung in m-Kresol gemessen. Die Anzahl der Carboxylgruppen wurde als Carboxylgruppenäquivalente/10⁶ g oder mmol/kg des Polymeren angegeben. Diese Größe wurde durch Titration des Polymeren in o-Kresol mit Kaliumhydroxyd bestimmt.

Der Beurteilung der Farbe der Polyester wurde das L a* b*-Farbsystem zugrundegelegt. Dieses ist eines der Farbsysteme zur Vereinheitlichung der Farbmessung und wurde aufgrund höherer Genauigkeit in der Darstellung wahrnehmbarer Farben und Farbdifferenzen durch die CIE-Kommission (Commission Internationale de l'Eclairage) im Jahr 1976 empfohlen. In diesem System ist L der Helligkeitsfaktor und a* bzw. b* sind Farbmeßzahlen. Im vorliegenden Fall ist der b*-Wert wichtig, der die gelb/blau-Balance angibt. Ein positiver b*-Wert bedeutet eine Gelb-Verfärbung, ein negativer b*-Wert eine Blau-Verfärbung. Herkömmlich mit Antimontrioxid hergestellte Polyester weisen einen b*-Wert zwischen 3 und 8 auf, wenn keine farbgebenden Zusätze verwendet werden (z.B. Kobald-Salze). Für Produkte, die nicht farbkritisch sind, werden auch höhere Werte akzeptiert.

### Beispiele 1 - 13: Herstellung katalytisch wirksamer Copräzipitate

In Tabelle 1 sind die Titan- und Metallverbindungen zusammengefaßt, die zur Herstellung der katalytisch wirksamen Copräzipitate gemäß den Beispielen 1-13 eingesetzt werden.

Titan (IV)-tetraisopropylat (0,18 mol) und die entsprechende Metallverbindung (0,02 mol) werden mit 100 ml absolutem Ethanol gelöst (Lösung A). 10,27 g destilliertes H₂O (0,57 mol) werden mit 100 ml absolutem Ethanol gemischt (Lösung B). Lösung A wird vorgelegt, und innerhalb von 30 min wird bei 22°C Lösung B zugetropft. Es fällt ein weißer Niederschlag aus. Nach 1 h Rühren wird das Gemisch zentrifugiert und der Rückstand 3 mal mit destilliertem H₂O gewaschen. Die erhaltenen Copräzipitate werden bei 70°C unter Vakuum getrocknet.

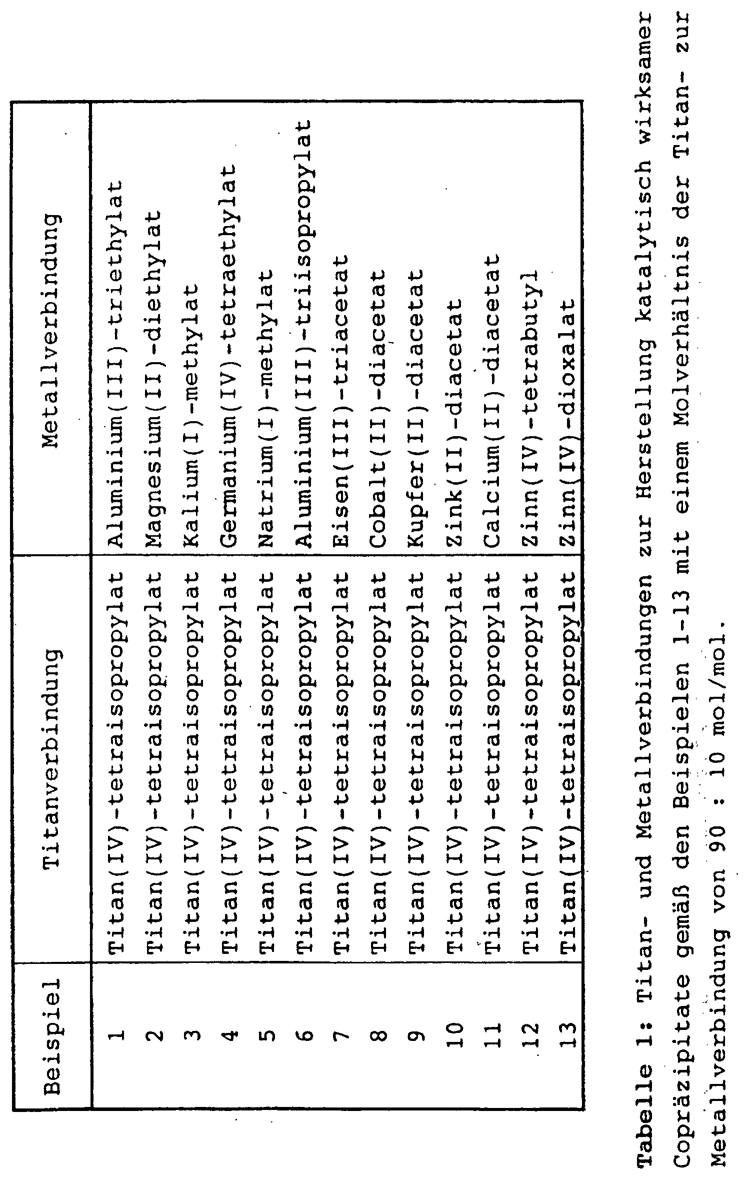

### Beispiele 14 - 26 und Vergleichbeispiel 1:

Es wurde in einem Zweistufenverfahren Polyethylenterephthalat hergestellt. In der ersten Stufe, der Umesterung, erfolgte die Umsetzung von Ethylenglykol und Dimethylterephthalat (DMT) im Molverhältnis 2,5:1 in Gegenwart von 100 ppm ZnAc₂·2 H₂O (Ac = Acetat) und 150 ppm Mn Ac₂·4 H₂O, bezogen auf DMT, bei Temperaturen im Bereich von 175 bis 250°C, wobei zur Vermeidung einer Sublimation des DMT die kontinuierliche Temperaturerhöhung von 175°C auf 250°C nicht zu rasch vorgenommen wurde. Neben den Umesterungskatalysatoren wurden 10 ppm, bezogen auf DMT, Entschäumungsmittel M10 zugesetzt. Das bei der Umesterung freigesetzte Methanol wurde über eine Kolonne abdestilliert. Bei Erreichen der Reaktionstemperatur von 240°C wurden 50 ppm Phosphor, bezogen auf das eingesetzte DMT, als Phosphonoessigsäureethylester zur Blockierung der Umesterungskatalysatoren zugesetzt.

Sobald die Reaktionstemperatur von 250°C erreicht war, wurden in den Beispielen 14-25 100 ppm, bezogen auf das vorliegende Bis-(2-hydroxyethyl)-terephthalat, eines der gemäß Beispiel 1 - 12 hergestellten Copräzipitate in Form einer 10gew.%igen Suspension in Glykol zugesetzt. Im Beispiel 26 wurden nur 50 ppm, bezogen auf das vorliegende Bis-(2-hydroxyethyl)-terephthalat, des gemäß Beispiel 13 hergestellten Copräzipitates eingesetzt. Die Polykondensationsreaktion erfolgte bei 290 °C unter einem Vakuum von 1,3 mbar.

In Tabelle 2 sind die zugesetzten Katalysatormengen, die Polykondensationszeiten, relative Lösungsviskositäten und b*-Werte zusammengefaßt, die mit den gemäß den Beispielen 1-13 hergestellten Copräzipitaten erreicht wurden und ferner in Vergleichsbeispiel 1 die mit Sb₂O₃ erhaltenen Ergebnisse. Der Vergleich der Polykondensationszeiten der erfindungsgemäßen Copräzipitat-Katalysatoren mit denen von Sb₂O₃ zeigt, daß die erfindungsgemäßen Copräzipitat-Katalysatoren eine deutlich kürzere Polykondensationszeit bewirken, obwohl sie in einer 4-fach, bzw. sogar in einer 8-fach kleineren Menge eingesetzt werden (vergl. Beispiele 14-25, bzw. Beispiel 26 mit Vergleichsbeispiel 1).

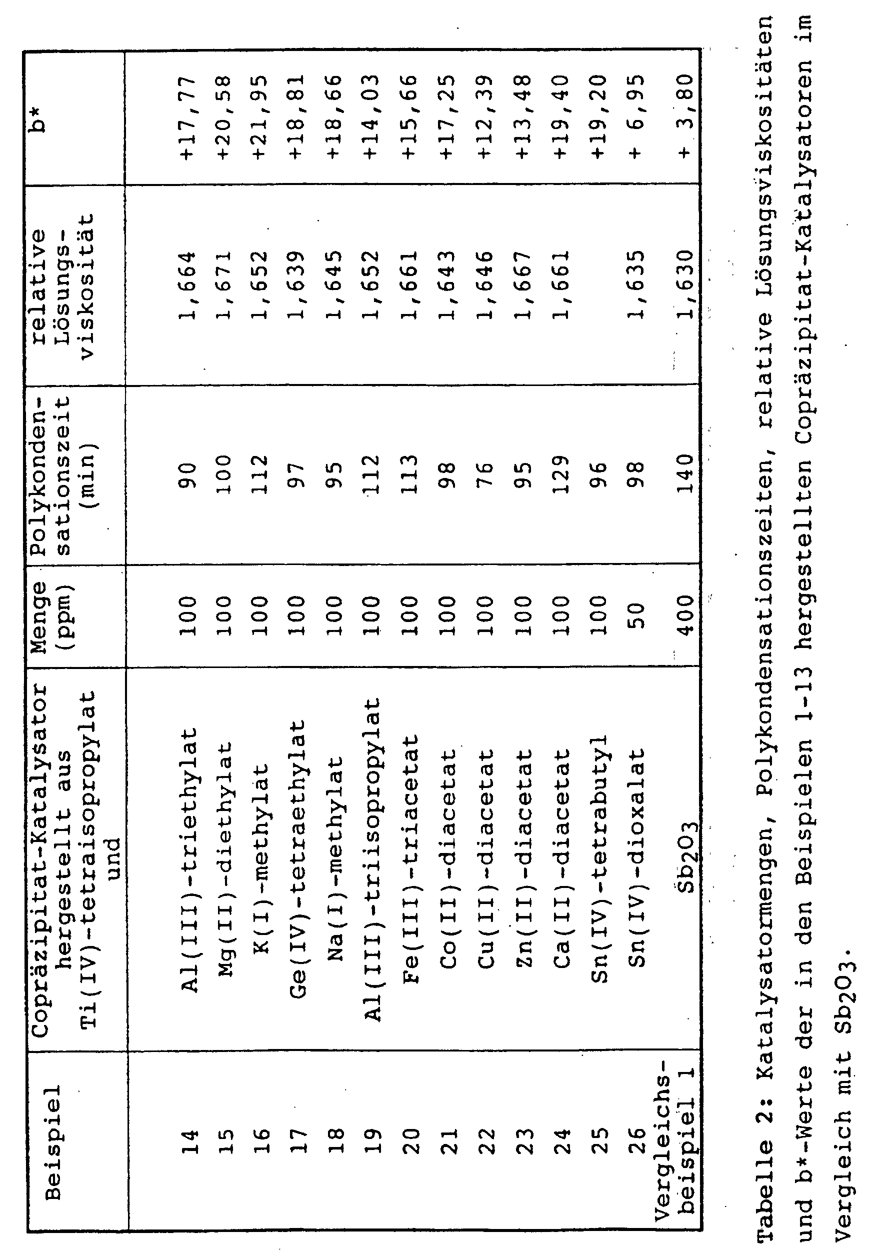

### Vergleichsbeispiel 2: Herstellung eines Malonat-Harzes mit Dibutylzinnoxid als Katalysator

Als Apparatur wurde für dieses Beispiel ein 2000 ml Fünfhalskolben verwendet, der mit einem Metall-Rührer, Tropftrichter, Stickstoff-Einleitungsrohr, Thermofühler für die Innentemperatur, einer 300 mm langen Vigreux-Silbermantelkolonne und einem Destillationskolonnenkopf ausgerüstet war. Der Reaktionsansatz bestand aus den nachfolgenden Komponenten:

| | |
|---|---|
| 312,45 g | (3 mol) 1,5-Pentandiol als Komponente A, |
| 560,60 g | (3,5 mol) Diethylmalonat als Komponente B, |
| 0,87 g | (= 0,1 Gew.%, bezogen auf A + B) Dibutylzinnoxid als Komponente C, |
| 43,5 g | (15 Gew.%, bezogen auf A+B) m-Xylol als Komponente D, |
| 130,5 g | (15 Gew.%, bezogen auf A + B) |
| | m-Xylol als Komponente E. |

Als Katalysator wurde das für diese Reaktion übliche Dibutylzinnoxid verwendet. Die Komponenten A, B, C und D wurden im Kolben eingewogen und mit Stickstoff gespült. Das Gemisch wurde sodann langsam erhitzt, und die ersten Tropfen von Ethanol wurden bei einer Innentemperatur von 115 °C abdestilliert. Bei sinkender Destillationsgeschwindigkeit wurde die Innentemperatur bis 200 °C erhöht. Danach wurde die Komponente E ergänzend als Schleppmittel für die Destillation zugetropft und weiterhin das Ethanol/m-Xylol-Destillat entnommen. Bei einem erreichten Umsatz von 99,5% wurde die Polykondensation abgebrochen. Dieser Umsatz wurde nach 16 Stunden erzielt.

Die Gesamtmenge an Destillat betrug zu diesem Zeitpunkt 378,03 g. Die abdestillierte Menge an Ethanol betrug 274,92 g (theoretische Gesamtmenge an Ethanol = 276,42 g). Die Farbzahl nach Gardner war 13.

### Beispiel 27: Herstellung eines Malonat-Harzes mit einem erfindungsgemäßen Copräzipitat-Katalysator gemäß Beispiel 13

Der Versuch von Vergleichsbeispiel 2 wurde mit dem gemäß Beispiel 13 aus Ti(IV)-tetraisopropylat und Zinn(IV)-dioxalat hergestellten Copräzipitat-Katalysator wiederholt. Der Reaktionsansatz bestand aus den nachfolgenden Komponenten:

| | |
|---|---|
| 312,45 g | (3 mol) 1,5-Pentandiol als Komponente A, |
| 560,60 g | (3,5 mol) Diethylmalonat als Komponente B, |
| 0,87 g | (0,1 Gew.%, bezogen auf A + B) Copräzipitat-Katalysator gemäß Beispiel 13 als Komponente C, |
| 43,5 g | (5 Gew.%, bezogen auf A + B)m-Xylol als Komponente D, |
| 87,0 g | (10 Gew.%, bezogen auf A+B) m-Xylol als Komponente E. |

Die Komponenten A, B, C und D wurden im Kolben eingewogen und mit Stickstoff gespült. Das Gemisch wurde sodann langsam erhitzt, und die ersten Tropfen von Ethanol im Gemisch mit m-Xylol wurden bei einer Innentemperatur von 142 °C abdestilliert. Bei sinkender Destillationsgeschwindigkeit wurde die Innentemperatur bis 200 °C erhöht. Danach wurde die Komponente E ergänzend als Schleppmittel für die Destillation zugetropft und weiterhin das Ethanol/m-Xylol-Destillat entnommen. Bei einem erreichten Umsatz von 99,6 % wurde die Polykondensation abgebrochen. Dieser Umsatz wurde schon nach 7 Stunden erzielt.

Die Gesamtmenge an Destillat betrug zu diesem Zeitpunkt 342,28 g. Die abdestillierte Menge an Ethanol betrug 276,04 g (theoretische Gesamtmenge an Ethanol = 276,42 g). Die Farbzahl nach Gardner war 10.

### Vergleichsbeispiele 3a und 3b mit handelsüblichen Titandioxiden

a) Es wurde analog zu den Beispielen 14-26 versucht, ein Polyethylenterephthalat herzustellen, wobei handelsübliche Titandioxide als Polykondensationskatalysatoren fungieren sollten. Zu diesem Zweck wurden nach der wie in den Beispielen 14-26 durchgeführten Umesterung und nach der Blockierung der Umesterungskatalysatoren bei Erreichen der Reaktionstemperatur von 250°C dem Reaktionsansatz 500 ppm Hombitec KO 3 TiO₂ (ein Titandioxid der Firma Sachtleben), bezogen auf das vorliegende Bis-(2-hydroxy-ethyl)-terephthalat, in Form einer 10 gew.%igen Suspension in Glykol als Polykondensationskatalysator zugesetzt. Die Polykondensationsreaktion erfolgte bei 290 °C unter einem Vakuum von 1,3 mbar. Nach 180 Minuten Reaktionsdauer wurde der Versuch abgebrochen, da sich wegen des zu niedrigen Molekulargewichts des Polykondensationsproduktes keine ausreichende Schmelzviskosität und damit auch keine ausreichende relative Viskosität eingestellt hatte.
b) Mit demselben negativen Ergebnis verlief ein zweiter, unter denselben Reaktionsbedingungen durchgeführter Versuch, bei dem als Polykondensationskatalysator 500 ppm Tilcom HPT 3 TiO₂ (Titandioxid der Firma Tioxide), bezogen auf das vorliegende Bis-(2-hydroxyethyl)-terephthalat, in Form einer 10 gew.%igen Suspension in Glykol zugesetzt wurden.

### Vergleichsbeispiel 4

In einer wie in den Beispielen 14-26 durchgeführten Polykondensation wurden bei 250°C 213 ppm Titantetrabutylat, bezogen auf das vorliegende Bis-(2-hydroxyethyl)-terephthalat, in Form einer 5 gew.%igen Lösung in Glykol als Polykondensationskatalysator zugesetzt wurden. Die Polykondensationsreaktion erfolgte bei 290°C unter einem Vakuum von 3,5 mbar. Nach einer Reaktionsdauer von 134 Minuten wurde ein Polymer mit einer relativen Lösungsviskosität von 1,633 erhalten. Der b*-Wert betrug 15,5, der COOH-Endgruppengehalt 20,2 Äquivalente/10⁶ g Polymer.

Dieses Vergleichsbeispiel zeigt insbesondere, daß Titantetrabutylat zwar bei einem deutlich schlechteren b*-Wert eine höhere katalytische Aktivität besitzt als Sb₂O₃, aber dennoch in einer höheren Konzentration eingesetzt werden muß als die erfindungsgemäß verwendeten Katalysatoren, um vergleichsweise kurze Polykondensationszeiten zu erzielen.

## Patentansprüche

1. Verfahren zur Herstellung von Polyestern und Copolyestern durch Polykondensation von polyesterbildenden Ausgangskomponenten, wobei in einer ersten Reaktionsstufe Ester oder Oligoester hergestellt werden, die in einer zweiten Reaktionsstufe in Gegenwart von Titankatalysatoren polykondensiert werden, **dadurch gekennzeichnet, daß** man in der Polykondensationsstufe zur Polykondensation der Ester oder Oligoester als Polykondensationskatalysator Copräzipitate einzeln oder im Gemisch einsetzt, die durch simultane hydrolytische Ausfällung einer Titanverbindung und einer Metallverbindung eines aus den Gruppen IA, IIA, VIIIA, IB, IIB, IIIB und IVB ausgewählten Metalls hergestellt wurden, wobei die Titanverbindung und die Metallverbindung unabhängig voneinander ein Alkylat, Alkoholat oder Carboxylat des Titans bzw. des Metalls ist und das Molverhältnis der Titanverbindung zur Metallverbindung ≥ 50 : 50 mol/mol ist.

2. Verfahren nach Anspruch 1, **dadurch gekennzeichnet, daß** das Metall der Metallverbindung Natrium, Kalium, Magnesium, Calcium, Eisen, Cobald, Kupfer, Zink, Aluminium, Germanium und Zinn ist.

3. Verfahren nach einem der Ansprüche 1 bis 2, **dadurch gekennzeichnet, daß** das Molverhältnis der Titanverbindung zur Metallverbindung ≥ 80 : 20 mol/mol ist.

4. Verfahren nach einem der Ansprüche 1 bis 3, **dadurch gekennzeichnet, daß** der Alkylat-, Alkoholat- oder Carboxylatrest des Titans bzw. des Metalls eine Verbindung mit 1-6 C-Atomen ist.

5. Verfahren nach einem der Ansprüche 1 bis 4, **dadurch gekennzeichnet, daß** die Alkylrest eine Butylgruppe, der Alkoholatrest eine Methylat-, Ethylat- oder i-Propylatgruppe und der Carboxylatrest eine Acetat- oder Oxalatgruppe ist.

6. Verfahren nach einem der Ansprüche 1 bis 5, **dadurch gekennzeichnet, daß** das Copräzipitat aus Titan(IV)-tetraisopropylat und Zinn(IV)-dioxalat im Molverhältnis 90 : 10 mol/mol hergestellt wird.

7. Verfahren nach einem oder mehreren der Ansprüche 1 bis 6, **dadurch gekennzeichnet, daß** das Copräzipitat einen Wassergehalt von 0 bis 15 Gew.%, bezogen auf das hydratisierte Copräzipitat, aufweist.

8. Verfahren nach einem oder mehreren der Ansprüche 1 bis 7, **dadurch gekennzeichnet, daß** man das Copräzipitat in einer Gesamtmenge von 5-500 ppm, bezogen auf die zu polykondensierenden Ester oder Oligoester, einsetzt.

9. Verfahren nach Anspruch 8, **dadurch gekennzeichnet, daß** man das Copräzipitat in einer Gesamtmenge von 10 bis 100 ppm, bezogen auf die zu polykondensierenden Ester oder Oligoester, einsetzt.

10. Verfahren nach einem oder mehreren der Ansprüche 1 bis 9, **dadurch gekennzeichnet, daß** man das Copräzipitat den zu polykondensierenden Estern oder Oligoestern vor ihrer Polykondensation in Form einer 5 bis 20 gew.%igen glykolischen Suspension zusetzt.

11. Verfahren nach einem oder mehreren der Ansprüche 1 bis 10, **dadurch gekennzeichnet, daß** man etwaig vorhandene Umesterungskatalysatoren aus der ersten Reaktionsstufe durch zusätzliche Zugabe von einer oder mehreren Phosphorverbindungen blockiert.

12. Verfahren nach Anspruch 11, **dadurch gekennzeichnet, daß** als Blockierungsmittel Carbethoxy-methyl-diethylphosphonat, Di(polyoxyethylen)hydroxy-methylphosphonat, Tetraisopropyl-methylen-diphosphonat und/oder H₃PO₄ eingesetzt werden.

13. Verwendung der gemäß den Ansprüchen 1 bis 9 verwendeten Polykondensationskatalysatoren zur Herstellung von Alkydharzen mit einem relativen Molekulargewicht von < 10 000.

14. Verwendung der gemäß den Ansprüchen 1 bis 9 verwendeten Polykondensationskatalysatoren zur Herstellung von gesättigten Polyesterharzen mit einem relativen Molekulargewicht von < 10 000.

15. Verwendung der gemäß den Ansprüchen 1 bis 9 verwendeten Polykondensationskatalysatoren zur Herstellung von Polyestern und Copolyestern als Vorprodukte für Polyurethane mit einem relativen Molekulargewicht von < 10 000.

16. Verwendung der gemäß den Ansprüchen 1 bis 12 verwendeten Polykondensationskatalysatoren zur Herstellung von thermoplastischen Polyestern und Copolyestern mit einem relativen Molekulargewicht von > 10 000.

17. Verwendung der gemäß Anspruch 16 verwendeten Polykondensationskatalysatoren zur Herstellung von Polyethylenterephthalat, Polybutylenterephthalat, Poly(ethylen-2,6-naphthalin-dicarboxylat), Poly(butylen-2,6-naphthalin-dicarboxylat), Poly(1,4-dimethylencyclohexanterephthalat) und deren Mischpolyestern auf der Basis hoher Homopolyester-Anteile von mindestens 80 Molprozent.

18. Verwendung der gemäß Anspruch 16 verwendeten Polykondensationskatalysatoren zur Herstellung von Polyetherestern.

19. Verwendung der gemäß den Ansprüchen 1 bis 9 verwendeten Polykondensationskatalysatoren zur Herstellung von vollaromatischen bzw. flüssig-kristallinen Polyestern.

## Claims

1. Process for producing polyesters and copolyesters via polycondensation of polyester-forming starting components, wherein in a first reaction stage esters or oligoesters are produced that in a second reaction stage are polycondensed in the presence of titanium catalysts, the process being **characterized by** using coprecipitates, individually or in a mixture, as polycondensation catalysts in the polycondensation stage for the polycondensation of the esters or oligoesters, the coprecipitates being prepared by simultaneous hydrolytic precipitation of a titanium compound and a metallic compound of a metal selected from the groups IA, IIA, VIIIA, IB, IIB, IIIB, or IVB, wherein the titanium and metallic compounds are, independently of one another, an alkylate, alcoholate, or carboxylate of titanium or the metal, respectively, and the molar ratio of the titanium compound to the metallic compound is ≥ 50:50 mol/mol.

2. Process in accordance with Claim 1, **characterized in that** the metal of the metallic compound is sodium, potassium, magnesium, calcium, iron, cobalt, copper, zinc, aluminum, germanium, or tin.

3. Process in accordance with Claim 1 or 2, **characterized in that** the molar ratio of the titanium compound to the metallic compound is ≥ 80:20 mol/mol.

4. Process in accordance with one of Claims 1 to 3, **characterized in that** the alkylate, alcoholate, or carboxylate group of titanium or the metal, respectively, is a compound with 1-6 C atoms.

5. Process in accordance with one of Claims 1 to 4, **characterized in that** the alkyl group is a butyl group, the alcoholate group is a methylate, ethylate, or isopropylate group, and the carboxylate group is an acetate or oxalate group.

6. Process in accordance with one of Claims 1 to 5, **characterized in that** the coprecipitate is produced from titanium(IV) tetraisopropylate and tin(IV) dioxalate in a molar ratio of 90:10 mol/mol.

7. Process in accordance with one or more of Claims 1 to 6, **characterized in that** the coprecipitate has a water content of 0 to 15% by weight with respect to the hydrated coprecipitate.

8. Process in accordance with one or more of Claims 1 to 7, **characterized in that** the coprecipitate is used in a total amount of 5 to 500 ppm with respect to the esters or oligoesters that are to undergo polycondensation.

9. Process in accordance with Claim 8, **characterized in that** the coprecipitate is used in a total amount of 10 to 100 ppm with respect to the esters or oligoesters that are to undergo polycondensation.

10. Process in accordance with one or more of Claims 1 to 9, **characterized in that** the coprecipitate is added prior to the polycondensation of the esters or oligoesters that are to undergo polycondensation, in the form of a 5 to 20% by weight glycolic suspension.

11. Process in accordance with one or more of Claims 1 to 10, **characterized in that** any transesterification catalysts remaining from the first reaction stage are blocked by adding one or more phosphorus compounds.

12. Process in accordance with Claim 11, **characterized in that** the blocking agent used is carbethoxymethyldiethyl phosphonate, di(polyoxyethylene)hydroxymethyl phosphonate, tetraisopropylmethylene diphosphonate, and/or H₃PO₄.

13. Use of the polycondensation catalysts employed in accordance with Claims 1 to 9 for producing alkyd resins with a relative molecular weight of < 10 000.

14. Use of the polycondensation catalysts employed in accordance with Claims 1 to 9 for producing saturated polyester resins with a relative molecular weight of < 10 000.

15. Use of the polycondensation catalysts employed in accordance with Claims 1 to 9 for producing polyesters and copolyesters as precursors for polyurethanes with a relative molecular weight of < 10 000.

16. Use of the polycondensation catalysts employed in accordance with Claims 1 to 12 for producing thermoplastic polyesters and copolyesters with a relative molecular weight of > 10 000.

17. Use of the polycondensation catalysts employed in accordance with Claim 16 for producing polyethylene terephthalate, polybutylene terephthalate, poly(ethylene-2,6-naphthalenedicarboxylate), poly(butylene-2,6-naphthalenedicarboxylate), poly(1,4-dimethylenecyclohexane terephthalate), or their copolyesters on the basis of high homopolyester fractions of at least 80 mole percent.

18. Use of the polycondensation catalysts employed in accordance with Claim 16 for producing polyether esters.

19. Use of the polycondensation catalysts employed in accordance with Claims 1 to 9 for producing fully aromatic or liquid-crystalline polyesters.

## Revendications

1. Procédé de préparation de polyesters et de copolyesters par polycondensation de composants de départ formant polyester, dans lequel, dans une première étape de réaction, on prépare des esters ou oligoesters, qui sont polycondensés dans une deuxième étape de réaction en présence de catalyseurs au titane, **caractérisé en ce que** l'on met en oeuvre dans l'étape de polycondensation, comme catalyseur de polycondensation pour la polycondensation des esters ou oligoesters, des coprécipités, seuls ou en mélange, qui sont préparés par précipitation hydrolytique simultanée d'un composé du titane et d'un composé métallique d'un métal choisi dans les groupes IA, IIA, VIIIA, IB, IIB, IIIB et IVB, le composé du titane et le composé métallique étant, indépendamment l'un de l'autre, un alkylate, un alcoolate ou un carboxylate du titane, respectivement du métal, et le rapport molaire du composé du titane au composé métallique étant de ≥ 50:50 moles/moles.

2. Procédé suivant la revendication 1, **caractérisé en ce que** le métal du composé métallique est le sodium, le potassium, le magnésium, le calcium, le fer, le cobalt, le cuivre, le zinc, l'aluminium, le germanium et l'étain.

3. Procédé suivant l'une des revendications 1 et 2, **caractérisé en ce que** le rapport molaire du composé du titane au composé métallique est de ≥ 80:20 moles/moles.

4. Procédé suivant l'une quelconque des revendications 1 à 3, **caractérisé en ce que** le reste alkylate, alcoolate ou carboxylate du titane, respectivement du métal, est un composé ayant 1-6 atomes de carbone.

5. Procédé suivant l'une quelconque des revendications 1 à 4, **caractérisé en ce que** le reste alkyle est un radical butyle, le reste alcoolate est un radical méthylate, éthylate ou i-propylate, et le reste carboxylate est un radical acétate ou oxalate.

6. Procédé suivant l'une quelconque des revendications 1 à 5, **caractérisé en ce que** le coprécipité est préparé à partir de tétraisopropylate de titane (IV) et de dioxalate d'étain (IV) dans un rapport molaire de 90:10 moles/moles.

7. Procédé suivant l'une ou plusieurs des revendications 1 à 6, **caractérisé en ce que** le coprécipité présente une teneur en eau allant de 0 à 15% en poids, sur base du coprécipité hydraté.

8. Procédé suivant l'une ou plusieurs des revendications 1 à 7, **caractérisé en ce que** l'on met en oeuvre le coprécipité en une quantité totale de 5-500 ppm, sur base de l'ester ou de l'oligoester à polycondenser.

9. Procédé suivant la revendication 8, **caractérisé en ce que** l'on met en oeuvre le coprécipité en une quantité totale de 10 à 100 ppm, sur base de l'ester ou de l'oligoester à polycondenser.

10. Procédé suivant l'une ou plusieurs des revendications 1 à 9, **caractérisé en ce que** l'on ajoute le coprécipité aux esters ou oligoesters à polycondenser avant leur polycondensation, sous la forme d'une suspension glycolique de 5 à 20% en poids.

11. Procédé suivant l'une ou plusieurs des revendications 1 à 10, **caractérisé en ce que** l'on bloque les catalyseurs de transestérification éventuellement présents, de la première étape de réaction, par addition d'un ou de plusieurs composés phosphorés.

12. Procédé suivant la revendication 11, **caractérisé en ce que** l'on met en oeuvre, comme agent de blocage, le carbéthoxy-méthyl-diéthylphosphonate, le di(polyoxyéthylène) hydroxyméthylphosphonate, le tétraisopropyl-méthylène-diphosphonate et/ou H₃PO₄.

13. Utilisation des catalyseurs de polycondensation utilisés suivant les revendications 1 à 9, pour la préparation de résines alkydes avec un poids moléculaire relatif < 10 000.

14. Utilisation des catalyseurs de polycondensation utilisés suivant les revendications 1 à 9, pour la préparation de résines polyester saturées avec un poids moléculaire relatif < 10 000.

15. Utilisation des catalyseurs de polycondensation utilisés suivant les revendications 1 à 9, pour la préparation de polyesters et copolyesters comme précurseurs de polyuréthannes avec un poids moléculaire relatif < 10 000.

16. Utilisation des catalyseurs de polycondensation utilisés suivant les revendications 1 à 12, pour la préparation de polyesters et de copolyesters thermoplastiques avec un poids moléculaire relatif > 10 000.

17. Utilisation des catalyseurs de polycondensation utilisés suivant la revendications 16, pour la préparation de poly(téréphtalate d'éthylène), de poly(téréphtalate de butylène), de poly(2,6-naphtalènedicarboxylate d'éthylène), de poly(2,6-naphtalènedicarboxylate de butylène), de poly(téréphtalate de 1,4-diméthylènecyclohexane) et leurs polyesters mixtes à base de proportions élevées, d'au moins 80% en moles, d'homopolyester.

18. Utilisation des catalyseurs de polycondensation utilisés suivant la revendications 16, pour la préparation de polyéther-esters.

19. Utilisation des catalyseurs de polycondensation utilisés suivant la revendication 16, pour la préparation de polyesters complètement aromatiques, respectivement de type cristal liquide.
